## Europäisches Patentamt
## European Patent Office
## Office européen des brevets

(19)

(11) Numéro de publication: **0 015 176**
**B1**

(12)

# FASCICULE DE BREVET EUROPEEN

(45) Date de publication du fascicule du brevet: **30.11.83**

(21) Numéro de dépôt: **80400131.1**

(22) Date de dépôt: **28.01.80**

(51) Int. Cl.³: **B 62 D 53/00,**
**B 62 D 31/02,**
**B 62 D 59/00, B 60 T 1/10,**
**B 60 K 9/00, B 60 K 17/22,**
**B 60 D 5/00**

(54) Véhicule sur roues du type articulé pousseur.

(30) Priorité: **21.02.79 FR 7904363**
**21.06.79 FR 7915899**
**18.09.79 FR 7923216**

(43) Date de publication de la demande:
**03.09.80 Bulletin 80/18**

(45) Mention de la délivrance du brevet:
**30.11.83 Bulletin 83/48**

(84) Etats contractants désignés:
**AT BE CH DE GB IT LU NL SE**

(73) Titulaire: **S.A. Louis Heuliez Société dite:**
**7, rue Louis Heuliez**
**F-79140 Cerizay (FR)**

(72) Inventeur: **Queveau, Gérard**
**Amik Farm**
**F-79140 Le Pin (FR)**
Inventeur: **Cheron, Christian**
**59, rue de Malabrit**
**F-79300 Bressuire (FR)**

(74) Mandataire: **Rodhain, Claude**
**Cabinet Rodhain-Genestie 30, rue La Boétie**
**F-75008 Paris (FR)**

(56) Documents cités:
DE - A - 1 937 624
DE - A - 2 448 723
DE - A - 2 756 439
DE - B - 1 155 347
DE - C - 857 893
DE - C - 921 304
DE - C - 953 134
FR - A - 2 138 025
FR - A - 2 142 300
FR - A - 2 299 196
FR - A - 2 360 439

(56) Documents cités:
FR - A - 2 388 175
US - A - 1 401 661
US - A - 3 227 235
US - A - 3 584 698
US - A - 3 817 341
US - A - 3 865 208
US - A - 3 892 283

PATENTS ABSTRACTS OF JAPAN, vol. 1, no.
62, 17 juin 1977, page 779 M 77

## Véhicule sur roues du type articulé pousseur

La présente invention concerne les véhicules sur roues du type articulé "pousseur", c'est-à-dire un châssis qui comporte au moins deux parties articulées l'une sur l'autre dans le sens de la longueur du véhicule, un train de roues de la partie avant étant directeur, et ces deux parties étant munies chacune d'au moins un train de roues, qui peut être moteur, un ensemble moteur-transmission du véhicule étant relié à cet effet à ces deux trains de roues, une partie de cet ensemble moteur-transmission qui est reliée au train moteur avant étant associée à des moyens de régulation de cette partie de l'ensemble moteur-transmission, lesdits moyens de régulation de la partie de l'ensemble moteur-transmission qui est reliée au train moteur avant, comportant des moyens de régulation avec un organe de seuil pour commander cette partie de l'ensemble moteur-transmission.

Il est connu que le comportement dynamique, c'est-à-dire en cours de déplacement, de ce type de véhicule est, plus que pour tout autre, lié à l'adhérence des pneumatiques sur le sol, bien que, dans la majorité des cas, la valeur de cette adhérence soit suffisante pour que la partie avant impose sa direction à la partie arrière.

Cependant, lorsque l'adhérence diminue, en raison par exemple de la nature du sol, de sa régularité ou de son orientation, des inconvénients apparaissent lors de braquages importants. En effet, la partie de l'effet de propulsion qui est transmise à la partie avant du véhicule par l'intermédiaire de l'articulation, se décompose, par rapport à l'axe de cette partie avant, en une composante axiale qui est propulsive et une composante transversale qui ne l'est pas. Cette composante transversale crée, autour du centre de gravité de la partie avant, un couple qui est opposé et supérieur à celui créé par la résistance latérale de la partie avant au dérapage, ce qui tend ainsi à "refermer" ou plier le véhicule au-delà de l'angle correspondant au braquage voulu.

On connaît déjà, par exemple par le brevet US 3.227.235, des véhicules du type considéré dans lesquels on prévoit de maintenir constante la force transmise entre les deux véhicules, cette force pouvant soit être nulle, soit avoir une certaine valeur correspondant soit à une traction, soit à une poussée, seul est examiné le fonctionnement en ligne droite et nullement en virages importants. Les moyens de régulation ne font que maintenir dans l'axe du pousseur l'effort de propulsion transmis par l'articulation, mais ils ne permettent nullement de réduire sa valeur si le seuil de sa composante transversale se trouve dépassé.

C'est pourquoi l'invention a pour but de fournir un véhicule ne présentant pas l'inconvénient rappelé ci-dessus, c'est-à-dire ne risquant pas de "fermeture" sans qu'il se produise par contre de réduction du rendement de propulsion.

A cet effet, l'invention à pour objet un véhicule du type précité, caractérisé en ce que l'organe de seuil est constitué par un capteur de la composante transversale (F2PR) de l'effort de propulsion transmis par l'articulation du véhicule sur la partie avant et que lesdits moyens de régulation mettent en action cette partie de l'ensemble moteur-transmission, lorsque la valeur de la composante transversale (F2PR) tend à dépasser une valeur de seuil prédéterminée et en ce que la composante transversale (F2PR) est définie par la relation:

$$\frac{\Sigma P_{fl} \cdot a}{c}$$

dans lequelle $\Sigma$ signifie la somme des produits du type $P_{fl} \cdot a$ pris pour chacun des trains de roues de la partie avant du véhicule, $P_{fl}$ étant la résistance latérale au dérapage du train de roues considéré, $a$ la distance entre le point d'application de cette résistance et le centre de gravité (G) de la partie avant, et $c$ la distance entre l'articulation du véhicule et ce même centre de gravité (G).

Cet agencement permet ainsi, dès qu'est franchi le seuil fixé de stabilité, d'appliquer directement une partie de l'effort de propulsion à la partie avant du véhicule, sans l'intermédiaire de l'articulation, ce qui permet de maintenir la composante transversale de l'effort transmis par l'articulation constamment en decà de la valeur entraînant une fermeture du véhicule, assurant ainsi la sécurité, quel que soit l'angle de braquage.

Cette disposition offre en outre l'intérêt de pouvoir tenir compte de la résistance à l'avancement de la partie avant, donc d'assurer la sécurité dans toutes les positions du véhicule, par exemple dans le cas de virages avec pente, de mise en butée des roues avant sur un obstacle, etc.

De manière particulièrement avantageuse, il peut en outre être prévu que les moyens de régulation de ladite partie de l'ensemble moteur-transmission comportent également un organe de répartition de l'effort de propulsion entre le train de roues moteur avant et le train de roues moteur arrière, relié à des organes de mesure de charge du train moteur avant et du train moteur arrière. Ceci permet de conserver le rendement de la propulsion, même dans les cas où celui-ci se trouverait, avec les véhicules du type connu pour lesquels la propulsion est conditionnée par la charge sur le train de roues moteur, nettement amoindri, si ce n'est annulé, du fait d'un patinage, à savoir lorsque la partie avant du véhicule est beaucoup trop chargée au détriment de la partie arrière, ou lorsque le coefficient d'adhérence du train de roues arrière est fortement réduit, par exemple sur de la glace.

Dans certains modes de réalisation particuliers de l'invention, il peut être prévu qu'au moins l'une des deux parties de la transmission qui sont reliées respectivement au train de roues moteur avant et au train de roues moteur arrière soit une transmission par fluide, à laquelle sont de préférence reliés les moyens de régulation, tandis que l'ensemble moteur-transmission comprend, également de préférence, un moteur unique.

Dans l'un de ces modes de réalisation, un moteur unique, disposé dans la partie arrière, actionne mécaniquement le train de roues moteur arrière, une transmission hydrostatique étant interposée entre le différentiel de ce train et celui du train de roues moteur avant. Dans un autre mode de réalisation, un moteur unique, également disposé dans la partie arrière, actionne deux pompes hydrauliques agissant sur les moteurs hydrauliques des trains de roues moteur arrière et avant des côtés droit et gauche respectivement.

Il est également possible, conformément à la présente invention, de profiter de la réversibilité d'une telle transmission hydrostatique par pompe et moteur hydrauliques pour récupérer au moins partiellement au moment du freinage l'énergie cinétique acquise par le véhicule et habituellement dissipée sous forme calorique dans les dispositifs de freinage. Cette récupération consiste avantageusement en un stockage d'une partie de ladite énergie cinétique puis une restitution de l'énergie stockée au moment du démarrage du véhicule en vue de diminuer le travail demandé au moteur.

A cet effet, il peut être prévu, de manière particulièrement avantageuse un accumulateur d'énergie hydraulique qui est relié à la boucle hydrostatique reliant la pompe au moteur hydraulique et dans lequel est envoyée la pression de fluide provenant du moteur hydraulique au cours d'un freinage, tandis que la surpression ainsi emmagasinée dans cet accumulateur est réinjectée dans le circuit du moteur hydraulique au cours du redémarrage et/ou d'une réaccélération, caractérisé en ce que l'accumulateur d'énergie hydraulique est relié à deux électrovannes qui sont reliées l'une à la branche haute pression de la boucle hydrostatique reliant la pompe au moteur hydraulique, et l'autre à la branche basse pression de cette boucle, et sont commandées sélectivement par un organe de régulation captant les pressions en divers points de ladite boucle, l'électro-vanne reliée à la branche haute pression s'ouvrant lorsque la pression dans l'accumulateur est supérieure à la pression dans la branche haute pression et cette pression supérieure à la pression dans la branche basse pression, tandis que l'électro-vanne reliée à la branche basse pression s'ouvre lorsque la pression dans cette branche est supérieure à la pression dans l'accumulateur et à la pression dans la branche haute pression.

Dans un autre mode de réalisation particulier de l'invention, il peut être prévu que la partie de l'ensemble moteur-transmission qui est reliée au train de roues moteur avant soit une transmission mécanique entraînée par la partie moteur de l'ensemble et que les moyens de régulation de cette partie de transmission de l'ensemble comportent un organe de couplage interposé sur cette transmission mécanique et relié à l'organe de seuil de mise en service de ces moyens de régulation.

Grâce à cet agencement, lorsque le véhicule se déplace en ligne droite ou en virage relativement ouvert, c'est-à-dire tant qu'il se trouve dans les limites de stabilité transversale, l'organe de seuil de mise en service maintient l'organe de couplage en position de désaccouplement ou ''débrayée'', de sorte que le véhicule est propulsé uniquement par son train de roues, ou essieu, arrière. Si, par contre, le véhicule s'engage dans un virage serré pour lequel il devient nécessaire de contrôler la stabilité transversale, ledit organe de seuil fait passer l'organe de couplage en position d'accouplement ou ''embrayée'', ce qui permet de transmettre une partie de l'effort de propulsion au train de roues moteur de la partie avant, assurant ainsi une stabilité parfaite de l'ensemble.

Hormis cet avantage essentiel concernant la stabilité, cette réalisation particulière présente le grand intérêt de pouvoir s'adapter sans modification importante, si ce n'est l'interposition de l'organe de couplage, sur les véhicules articulés pousseurs sur lesquels un train de roues de la partie avant est entraîné par l'intermédiaire d'une transmission mécanique. Elle améliore en outre, sur ce même type de véhicules, le rendement, intégré suivant le temps sur l'ensemble du fonctionnement, étant donné qu'en l'absence du montage conforme à l'invention, ce rendement est en permanence réduit du fait de la multiplicité des engrenages et autres éléments intermédiaires de la transmission. Il en est de même en ce qui concerne le niveau sonore et la fiabilité de la chaîne de transmission, également intégrés suivant le temps.

De préférence, il peut également être prévu que la partie de l'ensemble moteur-transmission qui est reliée au train de roues moteur arrière soit également une transmission mécanique entraînée par la partie moteur de l'ensemble, la partie moteur de l'ensemble étant avantageusement constituée par un moteur unique, de préférence thermique, disposé dans la partie arrière du véhicule.

De manière particulièrement avantageuse, les deux parties de l'ensemble moteur transmission qui sont respectivement reliées au train de roues moteur de la partie avant, et au train de roues moteur de la partie arrière, peuvent être montées en série avec interposition dudit organe de couplage, cette disposition offrant, la configuration la plus simple et de rendement maximal.

D'autres avantages de l'invention ressortiront de la description qui va suivre, à titre d'exemples non limitatifs et en regard des dessins annexés sur lesquels:

—la Fig. 1 représente une vue de dessus schématique d'un véhicule articulé suivant un premier mode de réalisation conforme à l'invention, représenté en position de trajet rectiligne;

—la Fig. 2 représente une vue analogue d'un second mode de réalisation conforme à l'invention;

—la Fig. 3 représente une vue schématique en élévation de l'un ou l'autre des véhicules des Fig. 1 et 2 représentés en position de braquage;

—la Fig. 4 illustre schématiquement le circuit de récupération d'énergie selon l'invention;

—la Fig. 5 représente une vue de dessus schématique d'un véhicule suivant un troisième mode de réalisation particulier conforme à l'invention.

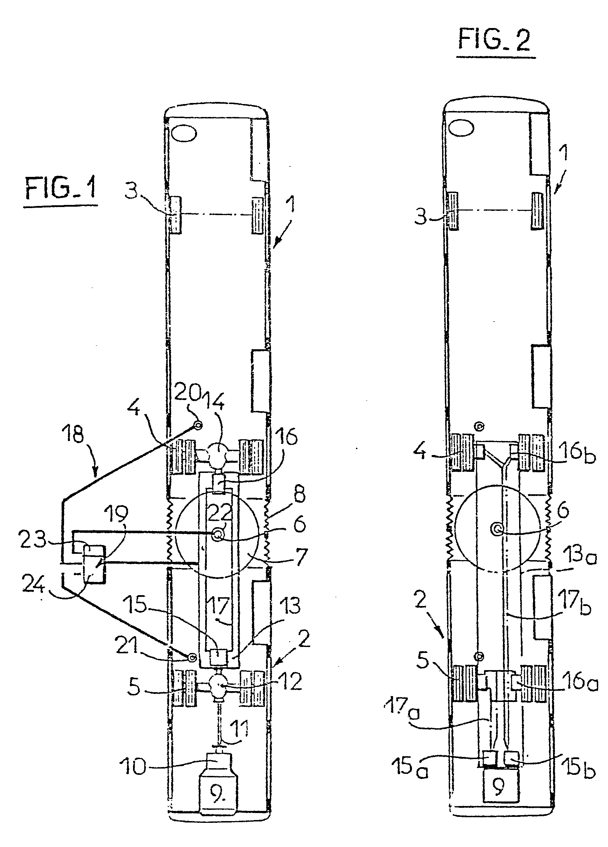

Les deux véhicules représentés par les Fig. 1 à 3 sont des autobus articulés comprenant un châssis qui comporte deux parties 1 et 2 articulées l'une sur l'autre dans le sens de la longueur du véhicule, la partie avant l'étant munie d'un train de roues avant directeur 3 et d'un train de roues arrière porteur 4, tandis que la partie arrière 2 est munie d'un train de roues unique porteur 5. Les deux parties sont articulées autour d'un axe vertical 6 qui fait partie d'une plateforme rotative 7 de part et d'autre de laquelle se trouvent des soufflets de raccordement 8.

Dans le mode d'exécution de la Fig. 1 qui correspond à une réalisation semi-hydrostatique, l'ensemble moteur-transmission de ce véhicule comprend, d'une part, un moteur thermique unique 9 disposé à l'arrière de la partie 2 et muni d'une boîte de vitesse 10 et, d'autre part, un ensemble de transmission qui comprend lui-même, d'une part, une transmission mécanique 11 qui entraîne le train de roues arrière 5 par l'intermédiaire d'un différentiel 12 et, d'autre part, une transmission hydrostatique 13 qui entraîne le train de roues central 4 par l'intermédiaire d'un second différentiel 14, cette transmission 13 comprenant elle-même une pompe hydraulique à cylindrée variable 15 entraînée par le différentiel 12, un moteur hydraulique 16 entraînant le différentiel 14 et un circuit hydraulique 17 reliant cette pompe 15 à ce moteur 16.

Ce véhicule comporte, par ailleurs, un ensemble de régulation 18 qui comprend un bloc de régulation électronique 19 présentant trois entrées qui sont reliées à trois capteurs 20, 21 et 22, ainsi qu'une sortie qui est reliée à la transmission hydrostatique 13 ou 13a. Les deux capteurs 20 et 21 sont constitués par des capteurs de charge qui sont disposés respectivement à proximité du train central de roues 4 et du train arrière de roues 5. Quant au capteur 22, il est constitué par un capteur de la composante transversale de l'effort de propulsion transmis par l'articulation 6 du véhicule à la partie avant 1 de celui-ci, ce capteur étant disposé sur l'articulation 6 considérée et étant, par exemple, constitué par une jauge de contrainte ou un capteur à quartz ou encore par un vérin hydraulique qui délivre une pression. Le bloc de régulation 19 comporte un organe 23 de seuil de mise en service de la transmission hydrostatique 13, ainsi qu'un organe 24 de répartition de l'effet de propulsion entre le train central 4 et le train arrière 5.

Le mode d'exécution de la Fig. 2, qui correspond à une réalisation entièrement hydrostatique, ne diffère du mode d'exécution de la Fig. 1 que par le fait que la transmission mécanique 11 et la transmission hydrostatique 13 sont remplacées par un ensemble de transmission hydrostatique unique 13a. Cet ensemble comprend deux pompes hydrauliques à cylindrée variable 15a et 15b, toutes deux entraînées par le moteur thermique 9 et quatre moteurs hydrauliques 16a et 16b associés respectivement aux roues de gauche et aux roues de droite du train central 4 et du train arrière 5, les moteurs 16a du train arrière étant reliés à la pompe 15a par un circuit hydraulique 17a et les moteurs 16b du train central reliés à la pompe 15b par un circuit 17b. La sortie du bloc de régulation 19 de l'ensemble 18 (non représenté) est reliée à l'ensemble de transmission 13a.

Le functionnement des véhicules ainsi décrits est le suivant:

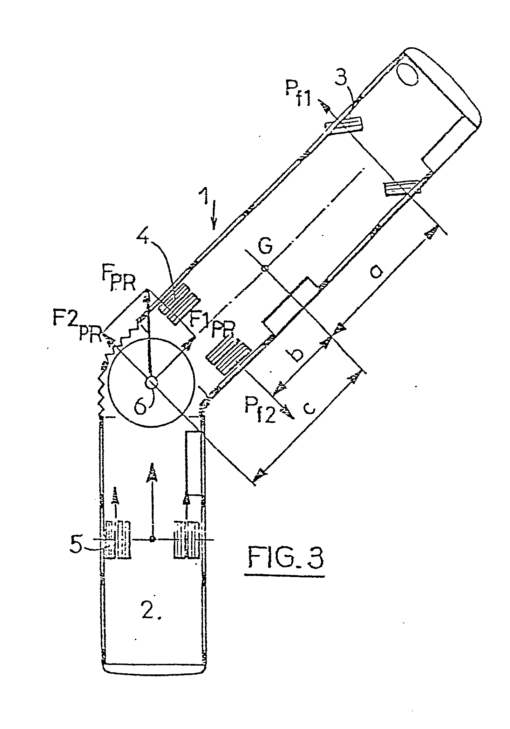

Si le train central de roues à du véhicule ne recevait aucun effort de propulsion direct, la partie avant 1 serait, en virage, et comme le montre la Fig. 3, soumise d'une part, aux résistances latérales au dérapage $P_{f1}$ et $P_{f2}$ du train avant 3 et du train central 4 qui sont appliquées à des distances respectives a et b du centre de gravité G de cette partie avant et, d'autre part, à la partie $F_{PR}$ de l'effort de propulsion fourni par le moteur qui est transmise par l'articulation 6 à cette partie avant. Cet effort de propulsion $F_{PR}$ se décompose par rapport à l'axe de la partie avant en une composante axiale propulsive $F1_{PR}$ qui participe au déplacement de la partie avant, et en une composante transversale $F2_{PR}$ qui est perdue pour l'effort de propulsion et qui participe, par ailleurs, à la tendance de la partie avant au dérapage, et donc à la "fermeture" du véhicule. Cette composante transversale étant appliquée à une distance C du centre de gravité, pour qu'il n'y ait pas de dérapage du train de roues central 4, il faut que soit vérifiée approximativement la relation:

$$F2_{PR} \cdot c \leqslant P_{f1} \cdot a + P_{f2} \cdot b$$

Lorsque le véhicule se déplace en trajectoire rectiligne, la composante transversale $F2_{PR}$ est

nulle et la relation ci-dessus est constamment vérifiée. Toute la propulsion du véhicule est assurée par le train arrière 5, ce qui permet d'obtenir un rendement optimal pour cette propulsion.

Lorsque le véhicule se déplace en virage, son comportement demeure le même qu'en trajectoire rectiligne tant que l'angle de braquage demeure inférieur à un certain seuil qui correspond à une valeur de seuil de la composante transversale $F2_{PR}$ qui est ellemême fonction des masses des deux parties du véhicule. Lorsque la valeur de $F2_{PR}$ tend à dépasser ce seuil, si le rayon du virage diminue, le capteur 22 coopère avec l'organe de seuil 23 du bloc de régulation 19, de manière que ce dernier autorise la mise en action de la transmission hydrostatique 13, ce qui permet de transmettre un effort de propulsion au train de roues central 4.

Grâce à l'action du bloc de régulation 19, $F2_{PR}$ ne dépasse en aucun cas le seuil autorisé, de sorte qu'il n'y a aucun risque de "fermeture" du véhicule, le couple dû à l'adhérence des roues des trains 3 et 4 étant supérieur à l'effort $F2_{PR}$ appliqué à l'articulation 6.

Ceci suppose que les capteurs de charge 20 et 21 n'étaient pas en service. Par contre, lorsque ces capteurs coopèrent avec l'organe de répartition 24 du bloc de régulation 19, ce dernier agit sur la transmission hydrostatique 13 ou 13a, de manière à répartir l'effort de propulsion total sur les deux trains de roues 4 et 5 en fonction de la charge des deux essieux correspondants, cette répartition se faisant en pourcentage de la valeur totale de l'effort. La sécurité au dérapage est obtenue de la même façon que précédemment, une partie de l'effort de propulsion étant transmise au train de roues central 4 dès que la composante transversale $F2_{PR}$ dépasse la valeur de seuil fixé. Par rapport au cas où les capteurs 20 et 21 ne sont pas en service, la seule différence réside dans le fait que les deux trains de roues 4 et 5 sont toujours moteurs, seules les valeurs relatives des efforts de propulsion appliqués à ces deux trains variant de façon à maintenir la composante transversale $F2_{PR}$ en-deçà du seuil fixé.

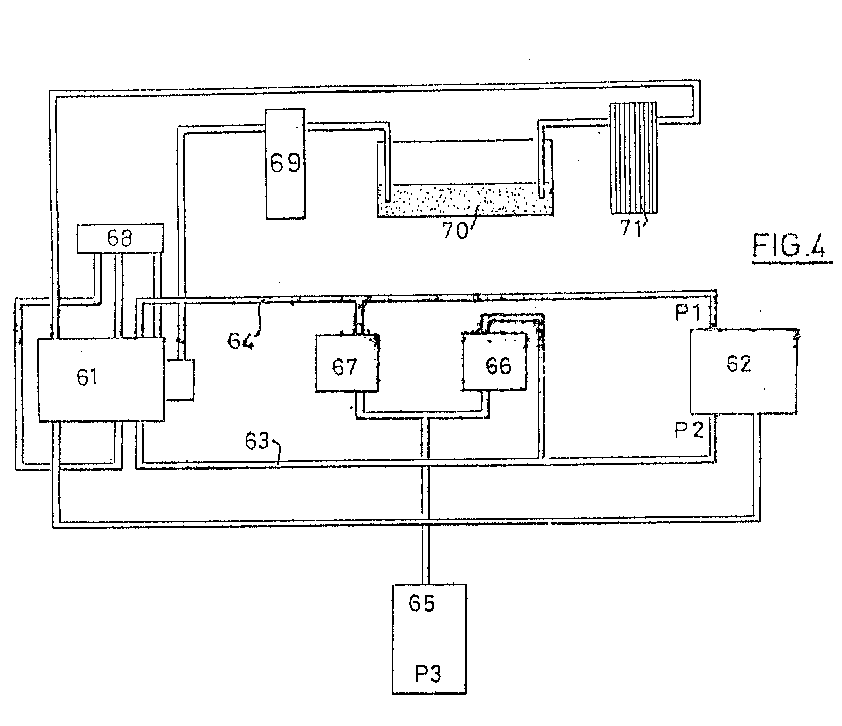

Sur la Fig. 4 on a représenté en 61 une pompe hydraulique entraînée à partir du moteur (non représenté) du véhicule. La pompe 61 est reliée à un moteur hydraulique 62 entraînant le train de roues avant (ou central) du véhicule (non représenté).

La boucle hydrostatique reliant lu pompe 61 au moteur 62 comprend (marche avant normale du véhicule) une branche 63 haute pression HP et une branche de retour 64 basse pression BP. Un accumulateur hydraulique 65 est relié à deux électrovannes 66 et 67 reliées, l'une 66 à la branche 63 et l'autre 67 à la branche 64.

Les électrovannes 66 et 67 sont commandées par un organe de régulation 68 captant les pressions en divers points de la boucle pompe-moteur.

On a également représenté sur la Fig. 4 le circuit de drainage et de gavage de la pompe comprenant notamment un filtre 69, une bâche 70 et un échangeur 71.

En fonctionnement normal, la pompe 61 débite normalement dans le circuit à la pression $P_1$ (HP). Le moteur 62 délivre une pression de sortie $P_2 < P_1$. Les deux électrovannes 66 et 67 sont fermées (par l'organe de régulation 68) et l'accumulateur 65 est isolé de la boucle hydraulique 63, 64.

Au cours d'un freinage et/ou d'un ralentissement (pourvu qu'il soit suffisamment intense), le moteur 62 est entraîné par la ou les roues et se comporte alors comme une pompe et la pression $P_2$ devient supérieure à la pression $P_1$.

Si $P_2$ est supérieure à $P_3$, pression dans l'accumulateur 65, l'électrovanne 67 s'ouvre et l'accumulateur 65 monte en pression. Si $P_2$ est inférieure ou égale à $P_3$, l'électrovanne 67 reste fermée et il ne se passe rien.

La restitution de l'énergie ainsi stockée dans l'accumulateur 65 s'opère au cours du redémarrage ou de la réaccélération. En effet, une fois que le fonctionnement de la transmission hydrostatique redevient normal et que $P_1$ redevient supérieure à $P_2$, l'électrovanne 66 s'ouvre, à condition que $P_3$ soit supérieure à $P_1$, et l'accumulateur 65 débite dans le circuit HP 63 donc en réduisant l'effort demandé à la pompe 61.

Bien entendu, les électrovannes 66 et 67 sont pilotées par l'organe de régulation 68 de manière à ne pouvoir être ouvertes en même temps et créer ainsi un circuit court. En outre, elles restent fermées toutes les deux lorsque le sens d'écoulement de l'huile du circuit hydraulique a été inversé par la commande de marche arrière du véhicule.

Un tel circuit s'applique au mode de réalisation de la Fig. 1 aussi bien qu'à celui de la Fig. 2. Dans la Fig. 1 seul le train de roues avant est mû hydrauliquement par un moteur hydraulique alimenté par une pompe elle-même entraînée par le différentiel du train de roues arrière actionné par un moteur unique. Une telle transmission hydrostatique peut être équipée du perfectionnement objet de la présente invention.

Dans la Fig. 2 le moteur unique entraîne en parallèle deux pompes hydrauliques, l'une pour les roues avant, l'autre pour les roues arrières. Chaque pompe actionne les moteurs hydrauliques des trains de roues arrière et avant (central). Dans ce mode de réalisation, on peut prévoir le circuit de récupération en incorporant entre chaque pompe et leurs moteurs associés un ensemble accumulateur-électrovannes conformément au schéma de la Fig. 4.

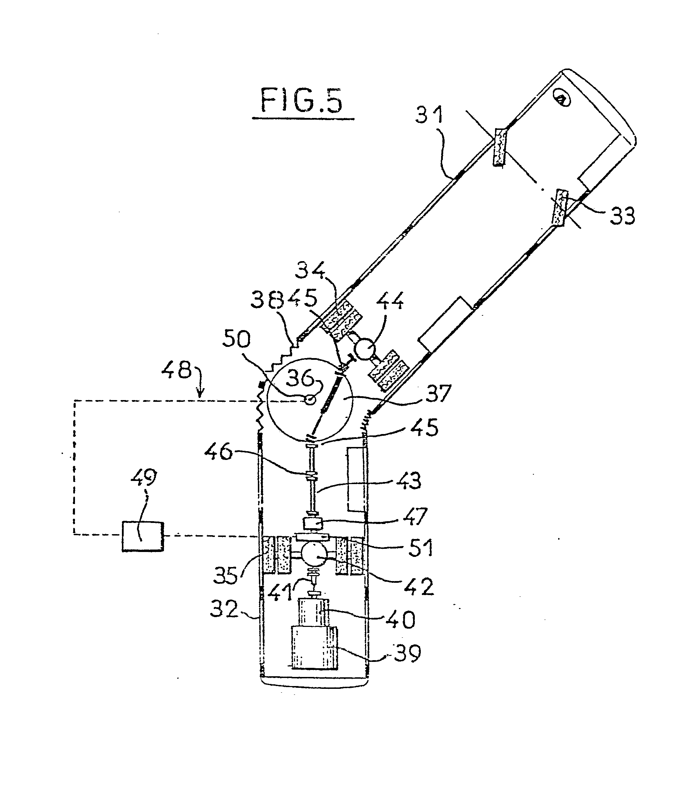

Le véhicule représenté par la Fig. 5 est un autobus articulé comprenant un châssis qui comporte deux parties 31 et 32, articulées l'une sur l'autre dans le sens de la longueur du véhicule, la partie avant 31 étant munie d'un train de roues directeur 33 et d'un train de roues arrière porteur 34, tandis que la partie arrière 32 est munie d'un train de roues unique porteur 35. Les deux parties sont articulées autour d'un axe vertical 36 qui fait partie d'une plateforme rotative 37, de part et d'autre de laquelle se trouvent des soufflets de raccordement 38.

L'ensemble moteur-transmission de ce véhicule comprend, d'une part, un moteur thermique unique 39, disposé à l'arrière de la partie 32 et muni d'une boîte de vitesse 40 et, d'autre part, un ensemble de transmission qui comprend lui-même, d'une part, une première transmission mécanique 41 qui entraîne le train de roues arrière 35 par l'intermédiaire d'un différentiel de pont arrière 42 et, d'autre part, une seconde transmission mécanique 43 qui entraîne le train de roues central 34 par l'intermédiaire d'un second différentiel de pont central 44. Cette seconde transmission 43 est constituée de plusieurs éléments articulés par l'intermédiaire de joints doubles de Cardan 45, un palier basse fréquence 46 étant par ailleurs prévu sur le premier de ces éléments disposé suivant l'axe de la partie arrière 32, ce même élément étant lui-même entraîné à partir d'un troisième différentiel 47 destiné à absorber les différences de rayons de courbure des trajectoires, et par conséquant de vitesse, des deux parties du véhicule.

Ce véhicule comporte par ailleurs un ensemble de régulation 48 qui comprend un bloc de régulation électronique 49 constitué par un organe de seuil de mise en service. Ce bloc présente une entrée qui est reliée à un capteur 50, disposé sur l'articulation 36 du véhicule, ce capteur étant un capteur de la composante transversale de l'effort de propulsion transmis par ladite articulation 36 à la partie avant 1 du véhicule, constitué par exemple par une jauge de contrainte ou un capteur à quartz, ou encore un vérin hydraulique délivrant une pression. Le bloc 49 présente également une sortie qui est reliée à un organe de couplage 51 qui est interposé sur la seconde transmission mécanique 43, entre le différentiel de pont arrière 42 et et le troisième différentiel 47. Cet organe de couplage peut être constitué par un coupleur électromagnétique, par exemple un embrayage électromagnétique, un coupleur hydrostatique ou encore, un coupleur hydrodynamique.

Le fonctionnement du véhicule ainsi décrit est le suivant:

Lorsque le véhicule se déplace en trajectoire rectiligne, la composante transversale $F2_{PR}$ est nulle et le capteur 50 n'agit pas sur l'organe de seuil du bloc 49, de sorte que celui-ci maintient l'organe de couplage 51 en position de désaccouplement ou de "débrayage". Toute la propulsion du véhicule est ainsi assurée par le train arrière 35, ce qui permet d'obtenir un rendement optimal pour cette propulsion.

Lorsque le véhicule se déplace en virage, son comportement demeure le même qu'en trajectoire rectiligne tant que l'angle de braquage demeure inférieur à un certain seuil qui correspond à une valeur préfixée de $F2_{PR}$.

Lorsque la valeur de $F2_{PR}$ tend à dépasser ce seuil, c'est-à-dire lorsque le rayon de virage diminue, le capteur 50 coopère avec l'organe de seuil du bloc 49 pour amener l'organe de couplage 51 en position d'accouplement ou "embrayée". Ceci permet de transmettre un effort de propulsion au train de roues central 34 et à répartir ainsi cet effort sur les deux parties du véhicule.

Ainsi, quelle que soit la configuration de circulation du véhicule, la composante $F2_{PR}$ ne dépasse en aucun cas le seuil autorisé, de sorte qu'il n'y a aucun risque de fermeture du véhicule et que la stabilité transversale de celui-ci est parfaitement assurée.

**Revendications**

1. Véhicule sur roues, du type comprenant un châssis qui comporte au moins deux parties (1—2, 31—32) articulées l'une sur l'autre dans le sens de la longueur du véhicule, un train de roues (3, 33) de la partie avant étant directeur, et ces deux parties étant munies chacune d'au moins un train de roues (4—5, 34—35), qui peut être moteur, un ensemble moteur-transmission du véhicule (9—10—11—12—13; 9—17a—17b, 39—40—41—42—43—44) étant relié à cet effet à ces deux trains de roues (4—5, 34—35), une partie (13, 17b, 43) de cet ensemble moteur-transmission qui est reliée au train moteur avant (4, 34) étant associée à des moyens de régulation (18, 48) de cette partie de l'ensemble moteur-transmission, lesdits moyens de régulation (18, 48) de la partie (13, 17b, 43) de l'ensemble moteur-transmission qui est reliée au train moteur avant (4, 34), comportant des moyens de régulation avec un organe de seuil (23, 49) pour commander cette partie (13, 17b, 43) de l'ensemble moteur-transmission, caractérisé en ce que cet organe de seuil (23, 49) est constitué par un capteur de la composante transversale (F2PR) de l'effort de propulsion transmis par l'articulation (6, 36) du véhicule sur la partie avant (1, 31) et que lesdits moyens de régulation (18, 48) mettent en action cette partie (13, 17b, 43) de l'ensemble moteur-transmission, lorsque la valeur de la composante transversale (F2PR) tend à dépasser une valeur de seuil prédéterminée et en ce que la composante transversale (F2PR) est définie par la relation:

$$\frac{\Sigma P_{f1} \cdot a}{c}$$

dans laquelle $\Sigma$ signifie la somme des produits du type $P_{f1} \cdot a$ pris pour chacun des trains de roues (3, 4, 34, 35) de la partie avant (1, 31) du véhicule, $P_{f1}$ étant la résistance latérale au dérapage du train de roues considéré, *a* la distance entre le point d'application de cette résistance et le centre de gravité (G) de la partie avant (1, 31), et *c* la distance entre l'articulation (6, 36) du véhicule et ce même centre de gravité (G).

2. Véhicule selon la revendication, caractérisé en ce que les moyens de régulation (18) de ladite partie (13, 17b) de l'ensemble moteur-transmission comportent, en outre, un organe (24) de répartition de l'effort de propulsion entre le train de roues moteur avant (4) et le train de roues moteur arrière (5), relié à des organes (20, 21) de mesure de charge du train moteur avant et du train moteur arrière.

3. Véhicule selon l'une quelconque des revendications 1 et 2, caractérisé en ce qu'au moins l'une (13, 17b) des deux parties de la transmission qui sont reliées respectivement au train de roues moteur avant (4) et au train de roues moteur arrière (5) est une transmission par fluide.

4. Véhicule selon la revendication 3, caractérisé en ce que l'autre partie (11—12) de la transmission est une transmission mécanique entraînée par la partie moteur (9—10) de l'ensemble moteur-transmission et reliée directement à l'un (5) des deux trains de roues moteurs (4, 5).

5. Véhicule selon la revendication 4, caractérisé en ce que c'est la partie (13, 17b) de la transmission qui est reliée au train de roues moteur avant (4) qui est une transmission par fluide.

6. Véhicule selon la revendication 3, caractérisé en ce que la partie (17a) de la transmission qui est reliée au train de roues moteur arrière (5) est également une transmission par fluide.

7. Véhicule selon l'une quelconque des revendications 3 à 6, caractérisé en ce que chaque transmission par fluide (13, 17b, 43, 17a) comprend une pompe (15, 15a, 15b, 61) entraînée mécaniquement et reliée par un circuit de fluide à un moteur à entraînement par fluide (16, 16a, 16b. 62).

8. Véhicule selon la revendication 7, dans lequel il est prévu un accumulateur d'énergie hydraulique (65) qui est relié à la boucle hydrostatique (63, 64) reliant la pompe (61) au moteur hydraulique (62) et dans lequel est envoyée la pression de fluide provenant du moteur hydraulique (62) au cours d'un freinage, tandis que la surpression ainsi emmagasinée dans cet accumulateur (65) est réinjectée dans le circuit du moteur hydraulique (62) au cours du redémarrage et/ou d'une réaccélération, caractérisé en ce que l'accumulateur d'énergie hydraulique (65) est relié à deux électrovannes (66, 67) qui sont reliées l'une (66) à la branche haute pression (63) de la boucle hydrostatique (63—64) reliant la pompe (61) au moteur hydraulique (62), et l'autre (67) à la branche basse pression (64) de cette boucle, et sont commandées sélectivement par un organe de régulation (68) captant les pressions en divers points de ladite boucle (63—64), l'électrovanne (66) reliée à la branche haute pression (63) s'ouvrant lorsque la pression ($P_3$) dans l'accumulateur (65) est supérieure à la pression ($P_1$) dans la branche haute pression (63) et cette pression ($P_1$) supérieure à la pression ($P_2$) dans la branche basse pression (64), tandis que l'électro-vanne (67) reliée à la branche basse pression (64) s'ouvre lorsque la pression ($P_2$) dans cette branche (64) est supérieure à la pression ($P_3$) dans l'accumulateur et à la pression ($P_1$) dans la branche haute pression (63).

9. Véhicule selon la revendication 8, caractérisé en ce que l'organe de régulation (68) agit sur les électro-vannes (66, 67) de manière qu'elles ne puissent pas être ouvertes simultanément.

10. Véhicule selon l'une quelconque des revendications 8 et 9, caractérisé en ce que l'organe de régulation (68) agit sur les électro-vannes (66, 67) de manière qu'elles restent fermées lorsque le sens d'écoulement du fluide hydraulique est inversé par la commande de marche arrière du véhicule.

11. Véhicule selon l'une quelconque des revendications 1, 2 et 7, caractérisé en ce que la partie (41 à 47) de l'ensemble moteur-transmission qui est reliée au train de roues moteur vant (34), est une transmission mécanique (41 à 47) entraînée par la partie moteur (39—40) de l'ensemble, et en ce que les moyens de régulation (48) de ladite partie de transmission (41 à 47) de l'ensemble comportent un organe de couplage-désaccouplage (51) interposé sur cette transmission mécanique (41 à 47) et relié à l'organe (49) de seuil de mise en service de ces moyens de régulation (48) de manière à n'être maintenu en position d'accouplement que lorsque le paramètre de stabilité transversale dépasse la valeur de seuil de cet organe de seuil (49).

12. Véhicule suivant la revendication 11, caractérisé en ce que la partie (41) de l'ensemble moteur-transmission qui est reliée au train de roues moteur arrière, est également une transmission mécanique entraînée par la partie moteur (39—40) de l'ensemble.

13. Véhicule suivant la revendication 12, caractérisé en ce que les deux parties (41, 43) de l'ensemble moteur-transmission qui sont respectivement reliées au train de roues moteur (35) de la partie arrière et au train de roues moteur (34) de la partie avant, sont montées en série, avec interposition dudit organe de couplage-désaccouplage (51).

14. Véhicule suivant la revendication 13, caractérisé en ce que, dans le cas où un troisième différentiel (47) est interposé sur la transmission (43) entraînant le train de toues avant (34), l'organe de couplage-désaccouplage (51) est interposé entre le différentiel (42) du train de roues arrière et ce troisième différentiel (47).

**Patentansprüche**

1. Räderfahrzeug mit einem Fahrgestell, das mindestens zwei Teile (1—2, 31—32) aufweist, die gelenkig miteinander in Längsrichtung des Fahrzeugs verbunden sind, wobei eine Achse (3, 33) des vorderen Teils lenkbar ist, und die jeweils mindestens eine Achse (4—5, 34—35) aufweisen, die angetrieben sein kann, wozu eine Motor-Getriebe-Gruppe (9—10—11—12—13; 9—17a—17b, 39—40—41—42—43—44) mit den beiden Achsen (4—5, 34—35) verbunden ist, wobei einem Teil (13, 17b, 43) dieser Motor-Getriebe-Gruppe, das mit der angetriebenen, vorderen Achse (4, 34) verbunden ist, eine Regeleinrichtung (18, 48) dieser Motor-Getriebe-Gruppe zugeordnet ist, dabei weist diese Regeleinrichtung (18, 48) dieses Teils (13, 17b, 43) der Motor-Getriebe-Gruppe, das mit der angetriebenen, vorderen Achse (4, 34) verbunden ist, eine Regeleinrichtung mit einem Schwellwertglied (23, 49) auf, das dieses Teil (13, 17b, 43) der Motor-Getriebe-Gruppe steuert, dadurch gekennzeichnet, daß des Schwellwertglied (43, 49) gebildet ist durch einen Meßwertfühler (F2PR) für die Transversalkomponente der Vortriebskraft, die durch das Gelenk (6, 36) des Fahrzeugs auf das vordere Teil (1, 31) übertragen wird, daß diese Regeleinrichtung (18, 48) dieses Teils (13, 17b, 43) der Motor-Getriebe-Gruppe in Aktion versetzt, wenn der Wert der Transversalkomponente (F2PR) einen vorgegebenen Schwellwert überschreiten will, und daß die Transversalkomponente (F2PR) gegeben ist durch die Gleichung:

$$\frac{\Sigma P_{fl} \cdot a}{c}$$

in der $\Sigma$ die Summe der Produkte vom Typ $P_{fl} \cdot a$, jeweils für jede Achse (3, 4, 34, 35) des vorderen Teils (1, 31) des Fahrzeugs gerechnet, bedeutet, $P_{fl}$ den seitlichen Gleitwiderstand der betrachteten Achse angibt, *a* der Abstand zwischen dem Angriffspunkt dieses Widerstandes und dem Massenmittelpunkt (G) des vorderen Teils (1, 31) ist und *c* den Abstand zwischen dem Gelenk (6, 36) des Fahrzeugs und diesem Massenmittelpunkt (G) angibt.

2. Fahrzeug nach Anspruch 1, dadurch gekennzeichnet, daß die Regeleinrichtung (18) des genannten Teils (13, 17b) der Motor-Getriebe-Gruppe weiterhin ein Organ (24) für die Aufteilung der Vortriebskraft zwischen der vorderen, angetriebenen Achse (4) und der hinteren, angetriebenen Achse (5) aufweist, das mit Meßfühlern (20, 21) für die Belastung der vorderen, angetriebenen Achse und der hinteren angetriebenen Achse verbunden ist.

3. Fahrzeug nach Anspruch 1 oder 2, dadurch gekennzeichnet, daß mindestens das eine (13, 17b) der beiden Teile des Getriebes, die verbunden sind jeweils mit der vorderen, angetriebenen Achse (4) und der hinteren, angetriebenen Achse (5), ein hydraulisches Getriebe ist.

4. Fahrzeug nach Anspruch 3, dadurch gekennzeichnet, daß das andere Teil (11—12) des Getriebes ein mechanisches Getriebe ist, das von dem Motorteil (9—10) der Motor-Getriebe-Gruppe angetrieben ist und direkt mit einer (5) der beiden angetriebenen Achsen (4, 5) verbunden ist.

5. Fahrzeug nach Anspruch 4, dadurch gekennzeichnet, daß das Teil (13, 17b) des Getriebes, das mit der vorderen, angetriebenen Achse (4) verbunden ist, ein hydraulisches Getriebe ist.

6. Fahrzeug nach Anspruch 3, dadurch gekennzeichnet, daß das Teil (17a) des Getriebes, das mit der hinteren, angetriebenen Achse (5) verbunden ist, ebenfalls ein hydraulisches Getriebe ist.

7. Fahrzeug nach einem der Ansprüche 3 bis 6, dadurch gekennzeichnet, daß jedes hydraulische Getriebe (13, 17b, 43, 17a) eine Pumpe (15, 15a, 15b, 61) aufweist, die mechanisch angetrieben ist und über einen hydraulischen Kreis mit einem hydraulischen Antriebsmotor (16, 16a, 16b, 62) verbunden ist.

8. Fahrzeug nach Anspruch 7, in dem ein Hydrospeicher (65) vorgesehen ist, der an den hydrostatischen Kreis (63, 64) angeschlossen ist, welcher die Pumpe (61) mit dem hydraulischen Motor (62) verbindet und in den ein Flüssigkeitsdruck eingeleitet wird, der während des Bremsens von einem hydraulischen Motor (62) kommt, wobei der so im Hydrospeicher (65) angesammlte Überdruck während eines erneuten Starts und/oder einer erneuten Beschleunigung in den Kreis des hydraulischen Motors (62) wieder eingespeist wird, dadurch gekennzeichnet, daß der Hydrospeicher (65) mit zwei Elektroventilen (66, 67) verbunden ist, von denen das eine (66) mit dem Hochdruckzweig (63) des hydrostatischen Kreises (63—64), der die Pumpe (61) mit dem hydraulischen Motor (62) verbindet, und das andere (67) verbunden ist mit dem Niederdruckzweig (64) dieses Kreises und die getrennt angesteuert werden durch ein Regulierglied (68), das den Druck an unterschiedlichen Stellen dieses Kreises (63—64) aufnimmt, das mit dem Hochdruckzweig (63) verbundene Elektroventile (66) öffnet, wenn der Druck ($P_3$) im Hydrospeicher (65) größer ist als der Druck ($P_1$) im Hochdruckzweig (63) und dieser Druck ($P_1$) größer ist als der Druck ($P_2$) im Niederdruckzweig (64), während das mit dem Niederdruckzweig (64) verbundene Elektroventil (67) öffnet, wenn der Druck ($P_2$) in diesem Zweig (64) größer ist als der Druck ($P_3$) im Hydrospeicher und der Druck ($P_1$) im Hochdruckzweig (63).

9. Fahrzeug nach Anspruch 8, dadurch gekennzeichnet, daß das Regulierglied (68) so die Elektroventile (66, 67) steuert, daß diese nicht gleichzeitig geöffnet sein können.

10. Fahrzeug nach Anspruch 8 oder 9, dadurch gekennzeichnet, daß das Regulierglied (68) die Elektroventile (66, 67) so ansteuert, daß sie geschlossen bleiben, wenn die Flußrichtung der Hydraulikflüssigkeit durch Einlegen des Rückwärtsganges des Fahrzeugs geändert wird.

11. Fahrzeug nach Anspruch 1 oder 2, dadurch gekennzeichnet, daß das Teil (41 bis 47) der Motor-Getriebe-Gruppe, das mit der vorderen, angetriebenen Achse (34) verbunden ist, ein mechanisches Getriebe (41 bis 47) ist, das von dem Motorteil (39 bis 40) der Gruppe angetrieben wird, und daß die Regeleinrichtung (48) dieses Teils des Getriebes (41 bis 47) der Gruppe ein an- und abkuppelbares Glied (51) aufweist, das in das mechanische Getriebe (41 bis 47) eingefügt ist und mit dem Schwellwertglied für die Ansteuerung dieser Regeleinrichtung (48) so verbunden ist, daß es in angekuppelter Position gehalten wird, wenn der Parameter für die Transversalstabilität den Schwellwert des Schwellwertgliedes (49) übersteigt.

12. Fahrzeug nach Anspruch 11, dadurch gekennzeichnet, daß das Teil (41) der Motor-Getriebe-Gruppe, das mit der hinteren, angetriebenen Achse verbunden ist, ebenfalls ein mechanisches Getriebe ist, das von dem Motorteil (39 bis 40) der Gruppe angetrieben wird.

13. Fahrzeug nach Anspruch 12, dadurch gekennzeichnet, daß die beiden Teile (41, 43) der Motor-Getriebe-Gruppe, die jeweils verbunden sind mit der angetriebenen Achse (35) des hinteren Teils und der angetriebenen Achse (34) des vorderen Teils, in Serie unter Zwischenschaltung des Gliedes für das An- und Abkuppeln (51) angeordnet sind.

14. Fahrzeug nach Anspruch 13, dadurch gekennzeichnet, daß für den Fall, daß ein drittes Differential (47) in dem die vordere Achse (34) antreibenden Getriebe (43) vorgesehen ist, das Glied für das An- und Abkuppeln (51) zwischen dem Differential (42) der hinteren Achse und diesem dritten Differential (47) zwischengeschaltet ist.

**Claims**

1. A wheeled vehicle of the type comprising a chassis having at least two parts (1—2, 31—32) which are articulated to each other along the length of the vehicle, a set of wheels (3, 33) of the forward part being steering means, and the two parts being each provided with at least one set of wheels (4—5, 34—35) which may be driving wheels, a motor-transmission unit (9—10—11—12—13; 9—17a—17b, 39—40—41—42—43—44) of the vehicle being connected for this purpose to these two sets of wheels (4—5, 34—35), a part (13, 17b, 43) of said motor-transmission unit which is connected to the front driving set of wheels (4, 34) being associated with means (18, 48) for controlling said part of the motor-transmission unit, said means (18, 48) for controlling the part (13, 17b, 43) of the motor-transmission unit which is connected to the front driving set of wheels comprising control means with a threshold element (23, 49) for bringing said part (13, 17b, 43) of the motor-transmission unit into action, characterized in that the threshold element (23, 49) comprises a detector of the transverse component (F2PR) of the vehicle driving force transmitted through the articulation (6, 36) of the vehicle to the front part (1, 31) of the latter, and the said control means (18, 48) being the said part (13, 17b, 43) of the motor-transmission unit when the value of the transverse component (F2PR) tends to pass a threshold value and in that the transverse component (F2PR) is defined by the relation:

$$\frac{\Sigma P_{f1} \cdot a}{c}$$

in which $\Sigma$ represents the sum of the products of the type $P_{f1} \cdot a$ taken for each one of the sets of wheels (3, 4, 34, 35) of the front part (1, 31) of the vehicle, $P_{f1}$ is the lateral resistance to skidding of the set of wheels considered, $a$ is the distance between the point of application of this resistance and the centre of gravity (G) of the front part (1, 31) and $c$ the distance between the articulation (6, 36) of the vehicle and said centre of gravity (G).

2. A vehicle as claimed in Claim 1 characterized in that the means (18) for controlling said part (13, 17b) of the motor-transmission unit further comprises means (24) for distributing the vehicle driving force between the front driving set of wheels (4) and the rear set driving set of wheels (5), connected to means (20, 21) for measuring the load on the front driving set of wheels and on the rear driving set of wheels.

3. A vehicle as claimed in Claim 1 or 2 characterized in that at least one (13, 17b) of the two parts of the transmission which are connected respectively to the front driving set of wheels (4) and to the rear driving set of wheels (5) is a fluid transmission.

4. A vehicle as claimed in Claim 3, characterized in that the other part (11—12) of the transmission is a mechanical transmission driven by the motor part (9—10) of the motor transmission unit and directly connected to one (5) of the two driving sets of wheels (4, 5).

5. A vehicle as claimed in Claim 4, characterized in that it is the part (13, 17b) of the transmission which is connected to the front driving set of wheels (4) which is a fluid transmission.

6. A vehicle as claimed in Claim 3 characterized in that the part (17a) of the transmission which is connected to the rear driving set of wheels (5) is also a fluid transmission.

7. A vehicle as claimed in any one of Claims 3 to 6 characterized in that each fluid transmission (13, 17b, 43, 17a) comprises a pump (15, 15a, 15b, 61) which is mechanically driven and connected through a fluid circuit to a fluid driven motor (16, 16a, 16b, 62).

8. A vehicle as claimed in Claim 7 in which a hydraulic energy accumulator (65) is provided which is connected to the hydrostatic loop (63, 64) connecting the pump (61) to the hydraulic motor (62) and into which is transmitted the fluid pressure produced by the hydraulic motor (62) during braking, the overpressure thus stored in this accumulator (65) being reinjected into the circuit of the hydraulic motor (62) in the course of subsequent moving off and/or acceleration of the vehicle, characterized in that the hydraulic energy accumulator (65) is connected to two electrically operated valves (66, 67), of which one valve (66) is connected to the high pressure branch (63) of the hydrostatic loop (63—64) connecting the pump (61) to the hydraulic motor (62) and the other valve (67) is connected to the low pressure branch (64) of the said loop, the valves being selectively controlled by regulating means (68) which detect the pressures at various points of the said loop (63—64), the valve (66) connected to the high pressure branch (63) opening when the pressure $(P_3)$ in the accumulator (65) is greater than the pressure $(P_1)$ in the high pressure branch (63) and the latter pressure $(P_1)$ greater than the pressure $(P_2)$ in the low pressure branch (64), whereas the valve (67) connected to the low pressure branch (64) opens when the pressure $(P_2)$ in the latter branch (64) is greater than the pressure $(P_3)$ in the accumulator and than the pressure $(P_1)$ in the high pressure branch (63).

9. A vehicle as claimed in Claim 8 characterized in that said regulating means (68) acts on the electric valves (66, 67) in such manner that they cannot be opened simultaneously.

10. A vehicle according to Claim 8 or 9 characterized in that the regulating means (68) acts on the electric valves (66, 67) in such a manner that the valves remain closed when the direction of flow of the hydraulic fluid is reversed by the reverse control of the vehicle.

11. A vehicle as claimed in any one of Claims 1, 2 and 7 characterized in that the part (41—47) of the motor-transmission unit which is connected to the forward set of driving wheels (34) is a mechanical transmission (41—47) driven by the motor part (39—40) of the said unit and in that the control means (48) of the said transmission part (41—47) of the unit comprise coupling and uncoupling means (51) interposed in the said mechanical transmission (41—47) and connected to the threshold element (49) putting the said control means (48) in operation in such a manner as to maintain the coupling position only when the parameter of transverse stability exceeds the threshold value of the said threshold element (49).

12. A vehicle as claimed in Claim 11 characterized in that the part (41) of the motor-transmission unit which is connected to the rear driving set of wheels is also a mechanical transmission driven by the motor part of the unit.

13. A vehicle as claimed in Claim 12 characterized in that the two parts (41, 43) of the motor-transmission unit which are connected respectively to the driving set of wheels (35) of the rear part and to the driving set of wheels (34) of the front part, are connected in series with the said coupling and uncoupling means (51) interposed.

14. A vehicle as claimed in Claim 13 characterized in that a third differential (47) is inserted in the transmission (43) driving the front set of wheels (34) and the coupling and uncoupling means (51) are interposed between the differential (42) of the rear set of wheels and said third differential (47).

FIG_1

FIG_2

FIG.3

FIG.4

0015176

## FIG.5